(19) Europäisches Patentamt
European Patent Office
Office européen des brevets

(11) **EP 0 670 519 B1**

(12) **EUROPEAN PATENT SPECIFICATION**

(45) Date of publication and mention
of the grant of the patent:
**17.10.2001 Bulletin 2001/42**

(51) Int Cl.7: **G03D 13/00**

(21) Application number: **95301276.2**

(22) Date of filing: **28.02.1995**

(54) **A method of carrying photosensitive materials in a photographic printer machine**

Verfahren zum Befördern von fotoempfindlichen Materialien in einem fotografischen Kopiergerät

Méthode pour transporter des matériaux photosensibles dans une imprimante photographique

(84) Designated Contracting States:
**CH DE FR GB IT LI**

(30) Priority: **28.02.1994 JP 2967794**
**18.11.1994 JP 28514694**

(43) Date of publication of application:
**06.09.1995 Bulletin 1995/36**

(73) Proprietor: **NORITSU KOKI CO., LTD.**
**Wakayama-shi, Wakayama (JP)**

(72) Inventors:
• **Ura, Hiroyoshi, c/o Noritsu Koki Co. Ltd.**
**Wakayama-shi, Wakayama (JP)**
• **Uenoyama, Akifumi, c/o Noritsu Koki Co. Ltd.**
**Wakayama-shi, Wakayama (JP)**

(74) Representative: **Hillier, Peter et al**
**Edward Evans Barker**
**Clifford's Inn**
**Fetter Lane**
**London EC4A 1BZ (GB)**

(56) References cited:
**EP-A- 0 626 619**          **DE-C- 4 130 565**

**Description**

BACKGROUND OF THE INVENTION

The present invention relates to a method of carrying photosensitive materials in parallel rows in a photographic printer machine to prevent its transfer sections from being fouled during development process.

Common photographic printers are designed in which a continuous trip of material is supplied from a roll, exposed to light on an exposure bed in the exposure station to print frames of images from a negative film, passed through tanks filled with developing liquids respectively, and dried out before unloaded.

The strip of photosensitive material exposed on the exposure bed is separated into pieces of a frame size for ease of the development process. A resultant series of the frame pieces are transferred to the development station in a row while spaced to one another by some tens millimeters so that they do not overlap each other in the development station.

In such a conventional photographic printer machine, the photosensitive materials are processed at a slower speed in the development station than in the exposure station. For increasing the performance speed of the conventional photographic printer machine, it is essential to improve the processing capability at the development station.

Although the feeding speed of the photosensitive material in a single row has been adjusted to a fastest possible rate, it has a substantial limitation. In a modification, the transfer section in the development station is increased in rack length to process a more number of frames of the photosensitive material in a given time. The longer the rack length is increased, the faster the transfer speed across the development station is determined.

However, as the rack length of the transfer section is increased, the overall length of the development station increases. This requires larger pieces of the tanks and thus more amounts of the developing liquids and more for replenishment. If the processing ability is increased, for example, from 500 frames/time to 1000 frames/time while the width of the frame of the photosensitive material remains unchanged, the rack length has to be increased to about 2.1 times, the amounts of the developing liquids to 2 times, and the replenishments also to 2 times.

To overcome the foregoing disadvantages of the conventional development station, we, the applicants, proposed in our previous application a modified development method and its apparatus in which the frame pieces of the photosensitive material transferred from the exposure station are alternately dislocated from a transfer path to left and right to have a zigzag form before fed to the development station.

A drawback of the method and the apparatus is that while the frame pieces of the photosensitive material are carried in two rows over transfer rollers in the development station, they leave dirt on intermediate regions of the rollers between the two rows. If a wider size of the photosensitive material is introduced into the development station, it runs over the intermediate regions of the rollers and will thus be fouled with the dirt.

Such dirt or waste results from oxidation and deterioration of chemical ingredients of the developing liquids which may be caused with time and when the temperature is changed during a long run of the development process. The dirt on the transfer rollers may more or less tar the edges of the frame pieces which run in two rows. There are thus needed some extra maintenance tasks of cleaning the rollers and their support rack and replacing the developing liquids with fresh ones or replenishing periodically for retarding the deterioration of the developing liquids.

It is an object of the present invention, in view of eliminating the fouling with such dirt during the transfer of a photosensitive material in a zigzag form across the development station, to provide a photosensitive material transfer method in which frame pieces of a photosensitive material are transferred in parallel rows with such proper timing provided for adjusting between the two rows as to save the running cost, prevent the fouling with dirt, and increase the processing capability, without performing the conventional maintenance tasks of cleaning the transfer rollers and their support rack, replacing the developing liquids or replenishing the same at intervals of short time.

SUMMARY OF THE INVENTION

In DE-A-4130565 an apparatus is disclosed for transferring paper from a printing station to a developing station. The paper comes from the printing station along a single transfer path and is either dislocated along parallel left and right paths or is maintained along a central transfer path.

The present invention provides a method of transferring photosensitive material pieces from an exposure station (A) to a developing station (C) including,

a multiple-row transfer mode in which the photosensitive material pieces (PC) are separated into multiple rows of pieces (PC) transferred at a controlled speed along a plurality of first transfer paths (20A, 20B); the pieces being conveyed along corresponding parallel paths in the developing station, characterised by

a cleaning inter-row transfer mode in which other photosensitive material pieces (PC) which have not been exposed are transferred along one or more second paths extending along regions between the first transfer paths, whereby the regions between the conveying paths in the developing station (C) are cleaned by said other photosensitive pieces, an wherein

the transfer action is selected between said multiple-row transfer mode and said cleaning inter-row transfer mode.

The selection may be conducted by when the transfer action is continued after a given interval of stop action, carrying out the inter-row transfer mode action and then, shifting to the multiple-row transfer mode.

In the above method the transfer action is shifted from the multiple-row transfer mode to the inter-row transfer mode when the photosensitive material pieces carried in multiple rows are counted to a given number.

The shift of the transfer of the photosensitive material pieces from the multiple-row transfer mode to the inter-row transfer mode is executed at every order of a film or in any intermediate length point of the order.

The shift of the transfer to the inter-row transfer mode is executed when the condition: total number of frames minus (number of rows of photosensitive material pieces-1) < number of current frames <= total number of frames is satisfied.

The shift of the transfer from the multiple-row transfer mode to the inter-row transfer mode may be executed with efficiency when a negative film length contains more than a predetermined number of frame.

As set forth above, the photosensitive material transfer method of the present invention allows the transfer action to be selected between the multiple-row transfer mode and the inter-row transfer mode. The inter-row transfer mode action is used for removing from rollers in the development station depositions of dirt which have been accumulated on regions between the rows during the transfer of the photosensitive material pieces so that succeeding pieces can be prevented from being fouled at their backs and edges.

Such dirt has to be removed from the rollers before a row of photosensitive material pieces of a wider size are transferred through the development station after the transfer of standard sized pieces in rows is conducted for a considerable period of time.

In case that the shift from the multiple-row transfer mode to the inter-row transfer mode is selected to perform a cleaning process when the transfer action is continued after a given interval of stop action, the photosensitive material pieces of not exposure processed form may be loaded in one or more rows for the purpose of cleaning the rollers.

Also in case of shifting from the multiple-row transfer mode to the inter-row transfer mode when the photosensitive material pieces carried in multiple rows are counted to a given number, not all the photosensitive material pieces are fouled with dirt during running along transfer paths in the development station. Hence, one or more of the photosensitive material pieces can do a cleaning task as running in the inter-row transfer mode. Accordingly, the action of selected photosensitive material pieces will prevent dirt from accumulating.

## BRIEF DESCRIPTION OF THE DRAWINGS

Fig. 1 is an enlarged cross sectional view showing an interface section between the development station and the exposure station in a photographic printer machine of the present invention;

Fig. 2 is a cross sectional view taken along the line II-II of Fig. 1;

Fig. 3 is a cross sectional view taken along the line III-III of Fig. 1;

Fig. 4 is a cross sectional view taken along the line IV-IV of Fig. 1;

Fig. 5 is a schematic block diagram of a control circuit of the photographic printer machine of the present invention;

Fig. 6 is a flow chart of a control procedure in the control circuit;

Fig. 7 is a flow chart showing a part of the control procedure;

Fig. 8 is a flow chart showing a part of the control procedure;

Fig. 9 is an explanatory view showing the action of common two-row transfer, cleaning, and one-row transfer;

Fig. 10 is a flow chart showing a modification of the control procedure shown in Fig. 6;

Fig. 11 is a cross sectional view similar to Fig. 2, where frame pieces of a photosensitive material are transferred in three parallel rows;

Fig. 12 is a cross sectional view similar to Fig. 4 but in case of the transfer mode shown in Fig. 11;

Fig. 13 is a flow chart, similar to Fig. 6, of the transfer mode shown in Fig. 11;

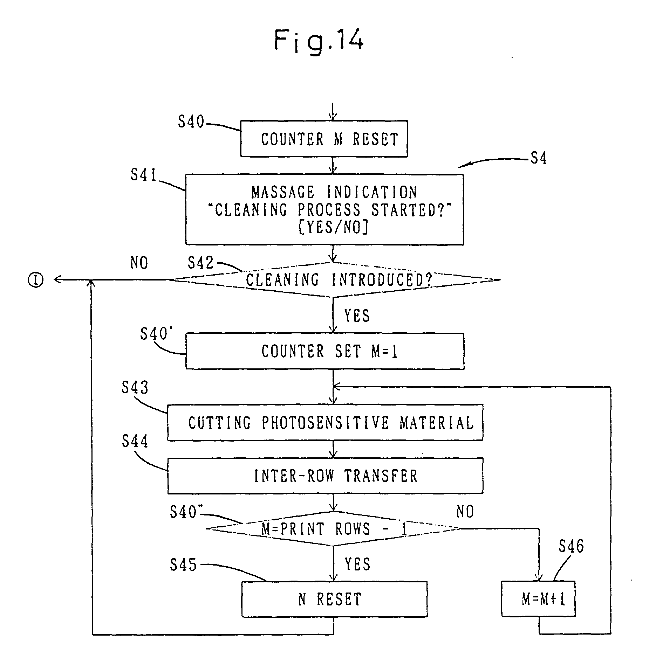

Fig. 14 is a flow chart of the cleaning process;

Fig. 15 is a flow chart of an inter-row process;

Fig. 16 is a schematic view showing transfer states in a transfer switch station and the development station; and

Fig. 17 is a schematic view similar to Fig. 16, where frame pieces of a photosensitive material are transferred in four parallel rows.

## DETAILED DESCRIPTION OF THE PREFERRED EMBODIMENTS

Preferred embodiments of the present invention will be described referring to the accompanying drawings.

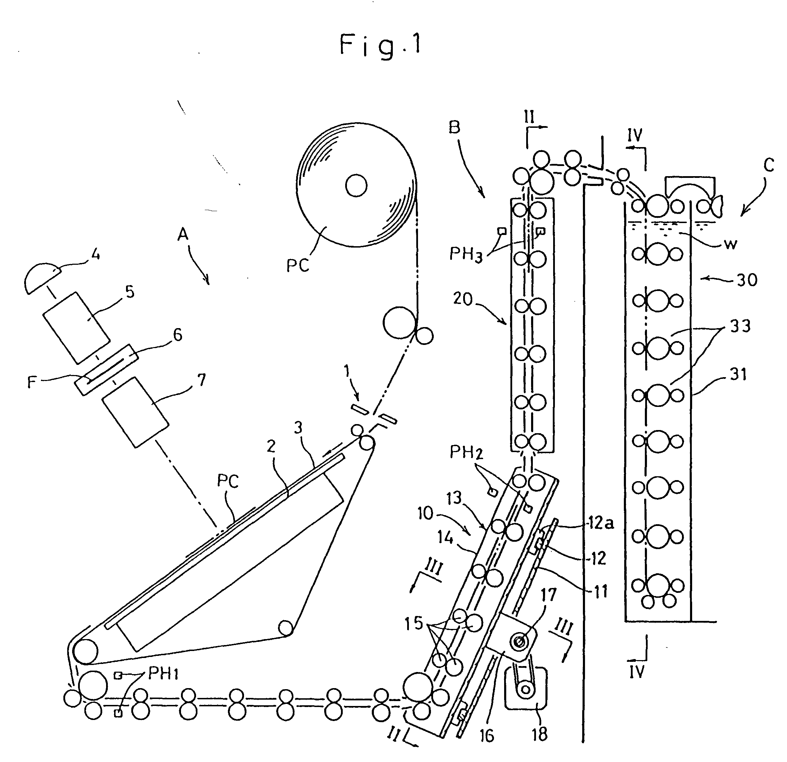

Fig. 1 is an enlarged cross sectional view showing an interface area between the exposure station and the development station in a photographic printer machine in which a photosensitive material transfer method of the present invention is implemented. In the exposure station A, a photosensitive material PC is supplied from a roll by the action of feeder rollers and separated by a cutter 1 into pieces of a frame size which are transferred in a row to an exposure bed 2.

The exposure bed 2 has an endless suction belt 3 tensioned with a snub roller for running in a triangle shape. The pieces of the photosensitive material PC are transferred to an exposure point while the suction belt 3 runs in a direction denoted by the arrow. More particularly, the suction belt 3 has a multiplicity of apertures provided in the surface thereof for sucking the photosensitive material pieces PC by the action of a vacuum. The photosensitive material pieces PC are exposed to light at the exposure point for printing pictures of a negative film F disposed adjacent to a shutter 6. The light emitted from a light source 4 is directed through a mirror tunnel 5, the shutter 6, and a lens unit 7 to the photosensitive pieces PC.

There are transfer guides provided along the transfer path extending from the exposure station A to a transfer section B and a development station C for guiding and preventing the photosensitive material piece PC from dislocating in their widthwise directions. Those guides are not shown for simplicity of the drawings.

The transfer section B comprises multiple pairs of rollers which are driven by corresponding endless belts. A transfer switch station 10 and a parallel transfer unit 20 are disposed in the middle of the transfer section B.

There are also mounted sensors $PH_1$, $PH_2$, and $PH_3$ for detecting the transfer movement of the photosensitive material pieces PC.

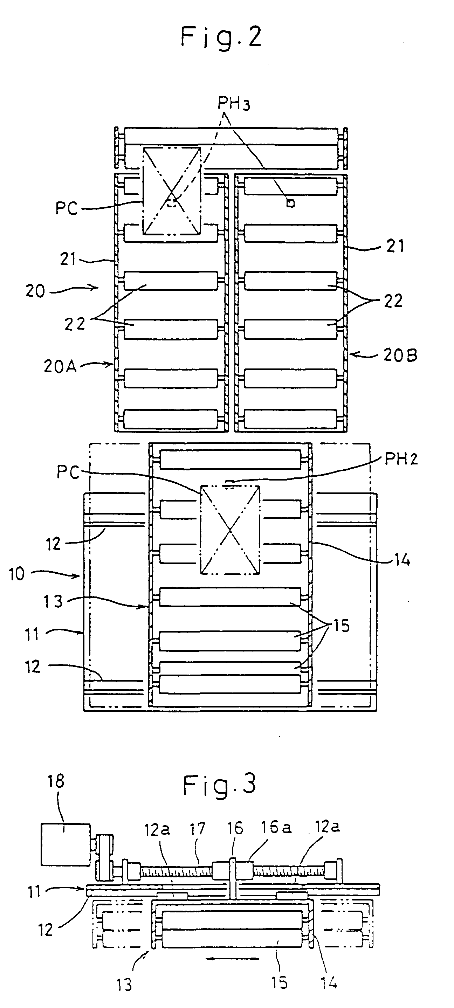

Figs. 2 and 3 are cross sectional views taken along the lines II-II and III-III of Fig. 1 respectively. The constructions shown are arranged in substantially a vertical direction.

The switch station 10 includes a traverse carrier 13 mounted on rails 12 of a base 11 for movement at a right angle to the transfer direction of the photosensitive material pieces PC. The traverse carrier 13 comprises a carrier frame 14 and multiple pairs of roller 15. The carrier frame 14 has at bottom guides 12a which are slidably fitted into the rails 12.

A projecting arm 16 extends from the bottom of the frame 14 of the traverse carrier 13 across a main body to a rear side of the base 11. The projecting arm 16 has a thread region 16a provided on a distal end thereof for accepting a ball screw 17. When the ball screw 17 is driven by a motor 18, the traverse carrier 13 travels to left and right of the transfer path.

The parallel transfer unit 20 comprises two transfer paths 20A and 20B extending parallel to each other, as shown in Fig. 2. Each path includes multiple pairs of rollers 22 mounted on a base 21. In action, the photosensitive material pieces PC are transferred along the transfer path while the rollers 21 are driven by an unshown endless belt connected to a motor. The two transfer paths 20A and 20B are driven separately and also, their speeds can be changed to fast or slow relative to each other. In common, the speed at a loading side or entrance of the transfer unit 20 is faster than that at an unloading side or exit.

The two transfer paths 20A and 20B are substantially identical in the width which is equal to that of the exposure bed 2. This means that the parallel transfer unit 20 is two times greater in the width than the exposure bed 2. The with of the transfer switch station 10 is more than two times greater than that of the exposure bed 2 for ease of the traverse movement.

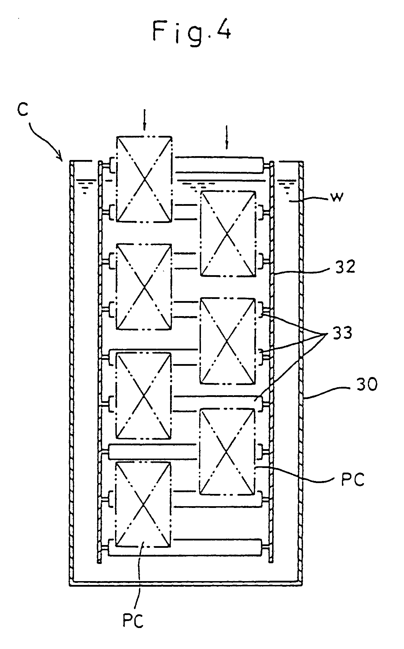

Fig. 4 is a cross sectional view taken along the line IV-IV of Fig. 1 and showing an interior construction of the development station C. A tank 30 in the development station C is separated by partitions 31 to form a plurality of compartments which are filled with different developing liquids W for carrying out chemical treatments of the photosensitive material pieces PC. It is understood that only one compartment in the tank 30 is shown in Fig. 4 for simplicity while the other compartments are unshown.

In each compartment of the tank 30, a rack is provided having multiple pairs of roller 33 supported by a frame 32. The width of the rack (or the rollers) is equal to that of the parallel transfer unit 20. The tank 30 has a size sufficient for accommodating the rack of the width.

As shown in Figs. 1 and 4, the photosensitive material pieces PC are transferred from the transfer section B to the development station C via an intermediate transfer path where they are deflected so as to move into the tank 30.

While the rollers in the exposure bed 2 at the exposure station A and in a transfer path before the transfer switch station 10 are driven by a given motor, the rollers in a transfer path before the cutter 1, in the switch station 10, and in the parallel transfer unit 20 are driven by their respectively motors. Those driving arrangements are not shown in Figs. 1 to 4.

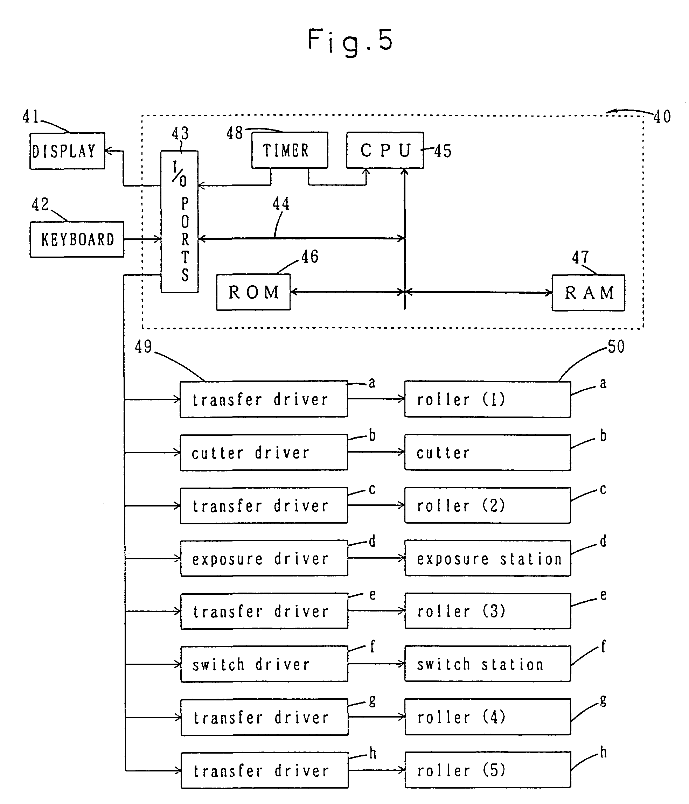

Fig. 5 is a schematic block diagram of a control circuit in the photographic printing machine of the present invention. The control circuit is designed for controlling the action of components of a microcomputer 40 including a display 41 for display of messages and a keyboard 42 for manual entry of a transfer start command, a YES or NO command for selecting the cleaning process (which will be explained later in more details), and other control commands.

The above commands are entered through I/O ports 43 into the microcomputer 40 and their relevant data are transmitted through a bus 44 and stored in a read only memory (ROM) 46 and a random access memory (RAM) 47 in response to the action of a central processing unit (CPU) 45. Denoted by 48 is a timer circuit. The ROM 46 also holds a basic program for performing the control actions. The RAM 47 temporarily holds a signal indicative of more than one hour elapsing after setting of the timer 48 and the YES or NO command signal for selecting the cleaning process.

According to logic operations of the arithmetic control circuit of the microcomputer 40, various control signals are produced and delivered in timing for actuating the components in the photographic printer machines. More specifically, the control signals are transmitted to a group of drivers 49a to 49h for actuating their respective components with desired timing.

The action of exposure and development processes in the photographic printer machine of the present invention will now be described.

In the exposure and development processes, a series of small sized pieces of the photosensitive material PC are handled in succession while they are separated into two rows by the transfer switch station 10 to run with a zigzag form.

As the photosensitive material pieces PC are carried in two rows over the rollers 33 in the tank 30 of the development station C, they allows dirt to deposit between the two rows on the rollers 33. The dirt may result from chemical extraction of ingredients from the developing liquids which is caused by change in the temperature.

If a larger size piece of the photosensitive material is introduced, it may be fouled on its back with a trace of the dirt. In such a case, the exposure and development processes have to be repeated to produce a replacement. Also, portions of the dirt may pollute the edge of the standard size pieces transferred in two rows. According to the present invention, the transfer of photosensitive material pieces across the development station is selected between two alternate modes, a one-row mode and a two-row mode, for preventing the rollers from being fouled with impurities.

Prior to the explanation of the selection between the two alternate transfer modes, the two-row transfer mode will be described as is a standard mode.

A series of the photosensitive material pieces PC exposed to light at the exposure station A are driven by the rollers in the transfer section B and fed to the transfer switch station 10. As the traverse carrier 13 is located in the center position (referred to as a front position hereinafter), it accepts each photosensitive material piece at the front position which coincides with a centerline of the switch station 10.

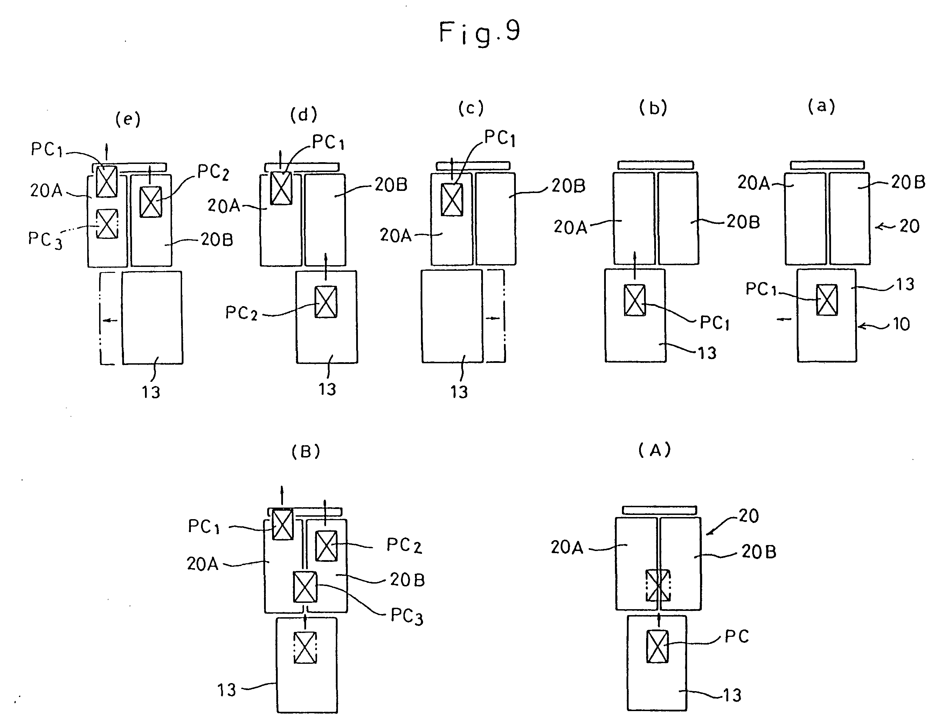

As shown in the steps (a) to (e) of Fig. 9, the traverse carrier 13 while feeding the photosensitive material pieces to a downstream is moved to the left. As the traverse carrier 13 travels to the left at the step (a), the first piece $PC_1$ is moved to the transfer path 20A at the step (b). At the step (c), the first piece $PC_1$ is further advanced at a higher speed to near the forward end of the transfer path 20A. Then, as the transfer speed is shifted to slow, the traverse carrier 13 moves back to its original front position.

As shown in the step (d), while the first piece $PC_1$ is transferred at a slower speed, the traverse carrier 13 receives the second piece $PC_2$ and travels to the right or transfer path 20B side. The second piece $PC_2$ is moved into the transfer path 20B and advanced at a higher speed towards the forward end of the same before transferred at a slower speed similar to the $PC_1$.

At the step (e), the two pieces $PC_1$ and $PC_2$ are further carried at the same slower speed to the development station C. Simultaneously, the traverse carrier 13 returns to the front position to receive a third piece $PC_3$. As the third piece $PC_3$ is located as denoted by the one-dot chain line, the three pieces $PC_1$, $PC_2$, $PC_3$ are arranged in a zigzag form to run in two rows to the development station C.

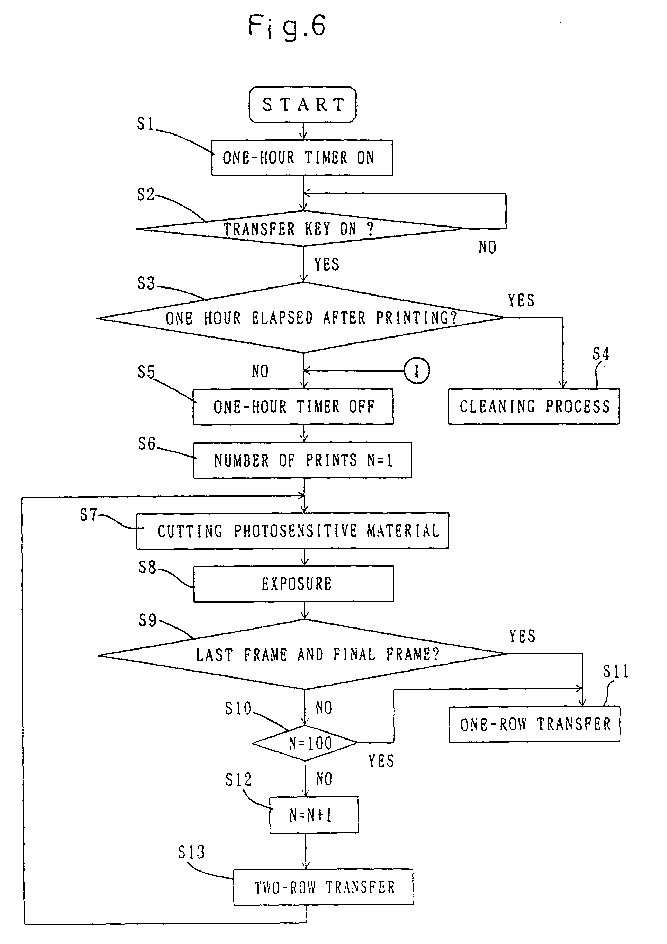

The two-row transfer mode may be alternated with the one-row mode for preventing fouling with dirt at the development station C. Fig. 6 is a schematic flow chart showing a procedure of selection between the two alternate transfer modes.

When the photographic printer machine is energized, the one-hour timer (48 in Fig. 5) is turned on at Step S1. The one-hour timer is provided for judging the need of the cleaning process (of Step S4 which will be described later) by examining whether or not a stall time is more than one hour. The stall time is commonly given after completion of the action in the one-row transfer mode (of Step S11 which will be described later) and the fouling with dirt will be accelerated during the stall time.

When the timer 48 is on, the stall time can be measured. The timer 48 remains activated by a supplement power source for counting an interval of time from temporary stop action to restart action while the photographic printer machine is disconnected.

At Step S2, it is examined whether or not a corresponding key on the keyboard 42 is turned on for actuating the transfer rollers 50a disposed before the cutter 1. At Step S3, it is examined whether or not one hour is elapsed after release of the last piece of the photosensitive material PC (referred to as a print hereinafter because it has been exposed to light and carrying a undeveloped image) from the transfer section B. When one hour is passed, the cleaning process is carried out before starting the two-row transfer mode (Step S4).

In the cleaning process, the prints are transferred in one row from the front position of the transfer switch station 10 to the development station C as are similar to the one-row transfer mode. More specifically, one of the prints which has not been subjected to the exposure process is fed to the development station C to remove dirt from the central regions of the rollers.

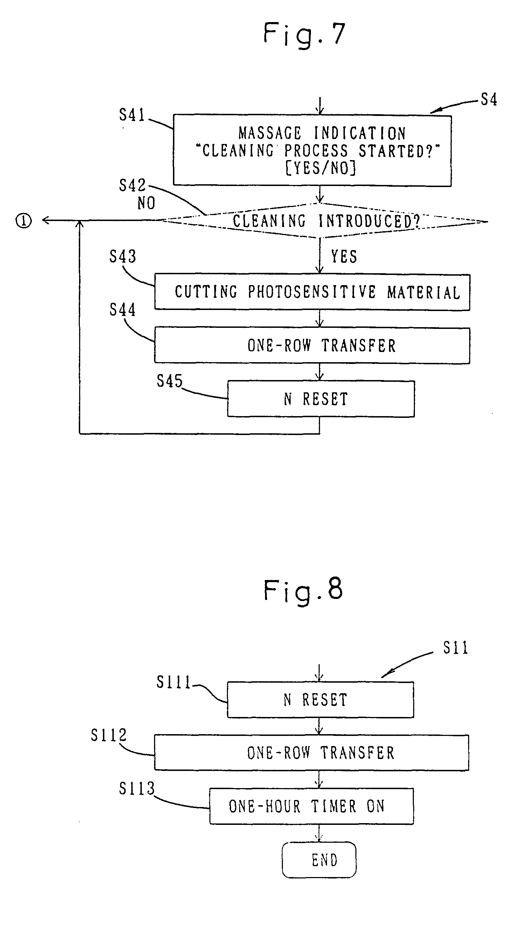

The action of the cleaning process at S4 is illustrated in a flow chart of Fig. 7. The cleaning procedure starts with Step S41 where an yes/no message is displayed for asking whether or not the cleaning process is started. In this embodiment, an YES or NO command is entered through the keyboard 42. If the display 41 is a liquid crystal display, YES and NO signals to the microcomputer 40 may be produced by direct access to the yes/no message on the screen with a finger or a pen.

At Step S42, the signal of selecting the cleaning process is accepted but if the fouling with dirt on the rollers in the development station C is negligible with the elapsing time of more than one hour, the procedure goes back through a route 1 to the main routine. The execution of the cleaning process is determined by an operator viewing the rollers in the development station C.

When the YES command is given at S42, the procedure moves to Step 43 where one frame size piece is separated from the strip of the photosensitive material PC by the cutter 1. The frame size piece is not subjected to the exposure process of the exposure station A and driven by the transfer rollers 50c and 50d until it enters the transfer switch station 10.

As shown in the step A of Fig. 9, the frame size piece denoted by PC is carried through the parallel transfer unit 20 and fed to the development station C where it runs over the rollers and removes dirt from their central regions. As the traverse carrier 13 is moved to the front station, a counter for counting the number of prints is reset (to N=0) at Step S45 and the procedure goes back to the main routine.

The procedure is retuned to the main routine in any of the cases that one hour is not elapsed after the passing of the preceding print, that the cleaning procedure is not selected, that the cleaning procedure is selected and completed.

At Step S6 of the main routine, the counter for counting the number of prints is set to N=1 and at Step S7, one frame piece is separated from the photosensitive material PC by the cutter 1. At Step S8, a corresponding picture of the film F is printed on the frame size piece at the exposure station A or 50d which is actuated by the driver 49d.

It is then examined at Step S9 whether or not the frame size piece or print (N=1) is the last frame of a current film and the final one of reprint copies of the same picture. The last frame of a current film is a print which carries, for example, the last picture of a 36-frame order negative film. The final one of reprint copies is, for example, the second one of two identical copies of one specific picture or a third copy of three identical copies of a picture. In common, it is judged that the print is the last frame of the negative film as long as copies are not requested.

If yes, the procedure goes to Step S11 where the one-row transfer action is carried out. More particularly, as best shown in Fig. 8, the action of Step S11 starts with resetting (N=0) of the number of prints (Step S111). Then, the transfer switch station 10 is shifted to its center position (Step S112) for transferring a single row of the prints to the development station C in the same manner as of the cleaning process (showing the step B of Fig. 9). At Step S113, the one-hour timer is turned on and this routine is finished.

If no is given at Step S9, the procedure moves to Step S10 where it is examined whether N=100 or not. This step is necessary due to the following reason. While the final frame of a current order film is transferred in one row, judgment whether frames of the order film are printed or not is executed at intervals of 6 frames. If the operator enters a command of printing not the last frame of the order, no is given at Step S9. As the result, the last frame of a succeeding order film may not be printed with repeating the command action.

To prevent such a fault action, the one-row transfer action is introduced when N=100 at Step S10. The judgment whether or not each succession of 6 frames is to be printed is also needed because the frames of an order often include failure pictures which may be at under- or over-exposure. The 6-frame interval judgment allows the operator to identify the presence of any failure picture through a view scope so that unnecessary prints can be eliminated.

In the embodiment, the action of Step S9 comes earlier than that of Step S10. The action of Step S10 may come earlier. As the one-row transfer action is always introduced at N=100, it is accepted that not printed frames exist when N is less than 100. It is also understood that the number of prints is not limited to N=100 and any appropriate number will be used with equal success.

If N=100 is not established at Step S10, the number of prints is increased by one at Step S12 without entering the one-row mode. Then, the transfer switch station 10 is actuated at Step S13 for leftward and rightward movement to transfer the prints in two rows.

As described, the transfer of prints before the development station C is carried out in two rows and if the action is halted for more than one hour, the cleaning process is systematically introduced to remove dirt from the rollers of the development station C with the one-row transfer mode. Also, after each two-row transfer mode action with N=100 is completed, it is shifted to the one-row transfer mode for carrying out the same cleaning process. Accordingly, the fouling of the rollers can be prevented without disturbing the advantage of the two-row transfer action in the development station C.

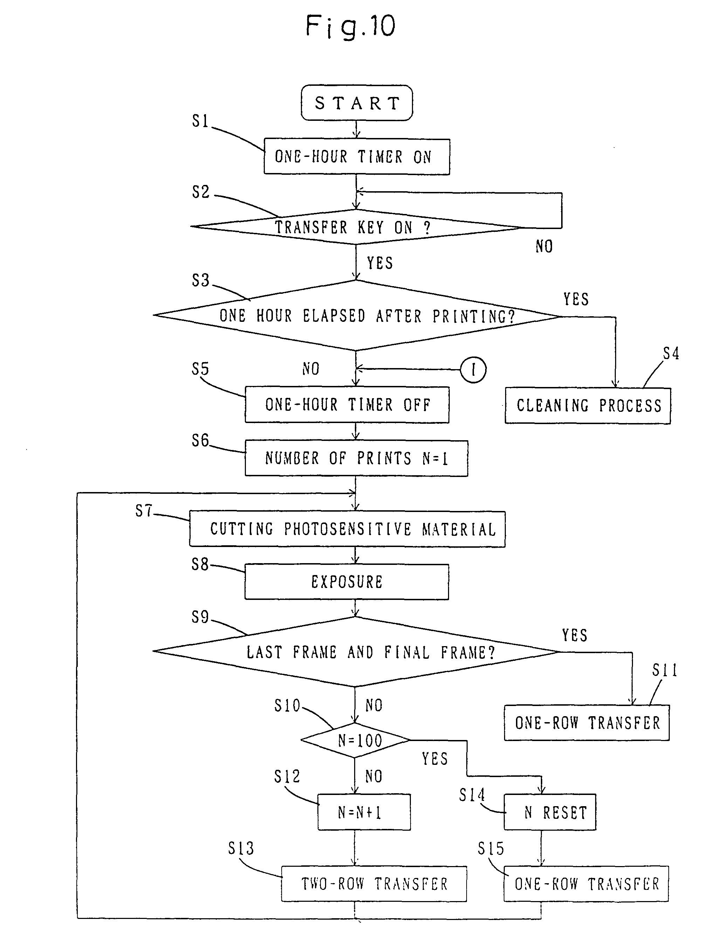

Fig. 10 is a flow chart showing a second embodiment which is a modification of the method of the first embodiment. In the first embodiment, when the number of prints is N=100 at Step S10, the procedure goes to Step S11 and will be terminated after the routine shown in Fig. 8 is completed.

In the second embodiment, when N=100 is given, the number N is reset at Step S14 and the procedure goes to Step S15 where the transfer switch station 10 is shifted to its center position for carrying out the one-row transfer action. Then, the procedure is not terminated but returned back to between Step S6 and Step S7 for continuing the two-row transfer action. It is not necessary to stop the action of the development process whenever the one-row transfer action is introduced at N=100.

In both the embodiments, before the number of prints comes to 100, the one-row transfer action is executed for every order of prints according to the judgment at Step S9. This action is illustrative but not of limitative. If desired, the one-row transfer action is introduced anytime during the processing of frames of an order.

It is also understood that the one-row transfer action for performing the cleaning process is not limited to one time but may be repeated until all the rollers are free from unwanted dirt according to the first and second embodiment.

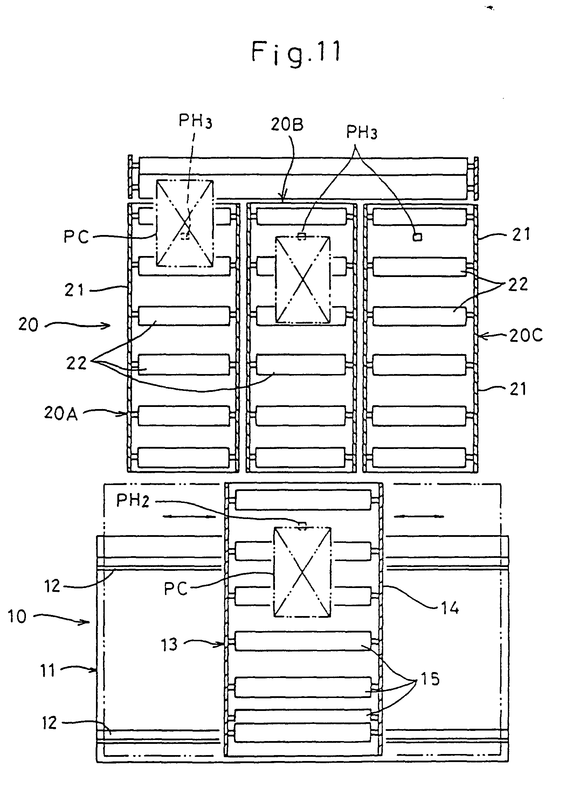

A third embodiment of the present invention will be described referring to Fig. 11 and the others. In this embodiment, the transfer switch station 10 selects its action between transfer of prints of the photosensitive material PC in three or more rows to the development station C and transfer of rows of exposed or unexposed frame size pieces of the material PC through particular areas in the development station C where the prints do not pass in the normal operation.

As shown, the prints are transferred in three rows according to this embodiment and may be carried in four, five, or more rows with equal success as are not limited to the three rows.

The third embodiment includes components and their arrangement similar to those of the first embodiment and will be described in the respect of specific features. As like components are denoted by like numerals, they will be explained in no more details.

As shown in Fig. 11, the transfer switch station 10 and the parallel transfer unit 20 of this embodiment are adapted for separating a single row of prints supplied from the exposure station A into three rows which are then carried through the parallel transfer unit 20.

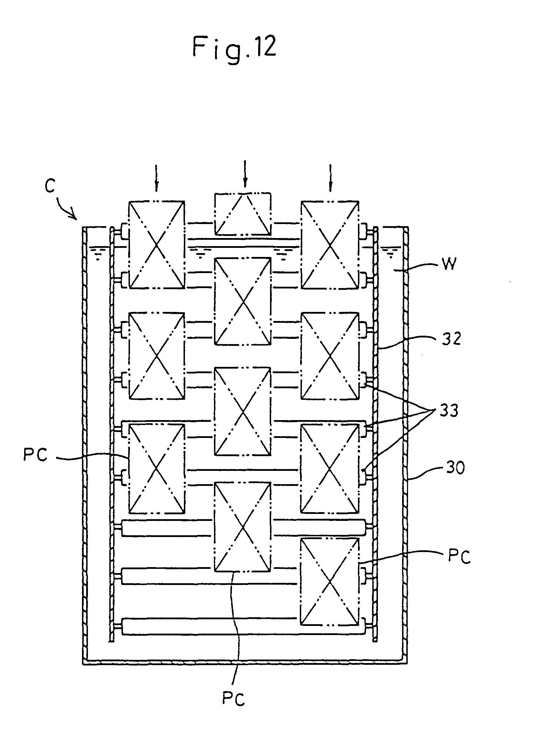

Fig. 12 similar to Fig 4 illustrates a main interior construction of the development station C. As shown, the prints are transferred in three rows, Hence, the cleaning procedure can be executed by transferring prints in plural (two) rows as compared with one row in the first embodiment.

The action of the third embodiment will be described which is differed from the first embodiment. The one-row transfer action and the two-row transfer action according to the two, first and second, embodiments are referred to as inter-row transfer and multiple-row transfer respectively for ease of the explanation. It is however noted that the inter-row transfer and the multiple-row transfer are substantially employed as synonymous terms since the first and second embodiments are exemplary cases of the third embodiment for performing the same processes.

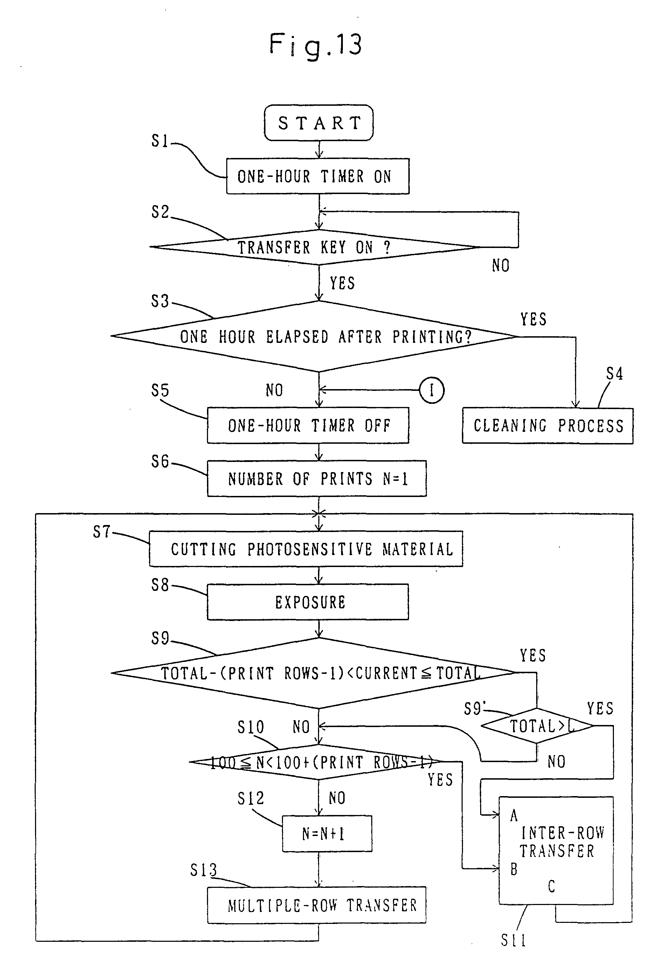

Fig. 13 is a flow chart of executing the action of the third embodiment. At Step S3, it is examined whether or not one hour is elapsed after the end of printing action. If yes, the cleaning process is carried out at Step S4 similar to that of the first embodiment.

This embodiment is differed from the first embodiment by the fact that the cleaning procedure is done with plural rows of prints (namely, two rows shown in Fig. 12). The cleaning process starts with Step S40 where a counter for counting the number of rows M is reset. The number M is equal to the number of rows of prints minus one. For example, when the photosensitive material prints are transferred in three rows, M is 2.

At Step S41, a message is displayed and at Step S42, it is examined whether the cleaning process is introduced or not. If the cleaning process is selected, the counter is set to M=1 at Step S40'. At Step S43, pieces are separated from the strip of the photosensitive material PC and subjected to the inter-row transfer action at Step S44 for carrying out the cleaning process.

At Step S40", it is examined whether or not M is equal to the number of print rows minus one. If no, the number M is increased by one at Step S46 and the procedure goes back to Step S43 to repeat the preparation of the cleaning process. When the cleaning process is completed with the number M equal to the number of print rows minus one, the number of rows of the prints is reset at Step S45 and the procedure moves to the exit point 1 shown in Fig. 13. In this manner similar to that of the first embodiment, the rollers in the development station C are cleaned.

From Step S5, the procedure further advances to Steps S6, S7, and S8. When relevant requirements are satisfied at Steps S9 and S10, the inter-row transfer mode is introduced at Step S11. If the requirements are not met, the number N is increased by increment at Step S12 and followed by the action of Step S13 where the prints are transferred in a predetermined number of rows through the development station C as well as the action of the first embodiment.

The requirement at Step S9 is expressed by:

$$\text{total number of frames - (number of print rows - 1)}$$

$$< \text{number of current frames} \leq \text{total number of frames.}$$

The number of print rows minus one is the number of rows for performing the inter-frame transfer action. Accordingly, when the number of current frames is smaller than the total number of the frames but greater than a difference between the total frame number and the number of rows of prints minus one, yes is given at Step S9.

For example, when the prints of a 24-frame film are transferred in three rows, the 23rd and 24th frames which are between 24th and 22nd determined by 24-3 (3-1)=22 are subjected to the inter-row transfer action of Step S11.

When yes is given at Step S9, it is then examined at Step S9' whether or not a negative film length to be printed is longer than L (film length (=number of frames) >L). L may be stored or entered by the operator using the keyboard or other input device.

As a common negative film length contains six or less frames, L=7 is preferred. More particularly, this judgment is needed when a client brings a 6-frame film length for having copy prints rather than a 12-, 24-, or 36-frame full negative film which is loaded for printing directly after subjected to the initial film development. If the 6-frame film length is treated as the full frame film, the inter-row transfer action claims a time loss. The time loss will be explained later in more detail.

If the film length to be printed is greater than L (yes at Step S9'), i.e. the film is a full frame film, the inter-row transfer action is introduced. Otherwise, no inter-row transfer action is executed to avoid declination of the working efficiency.

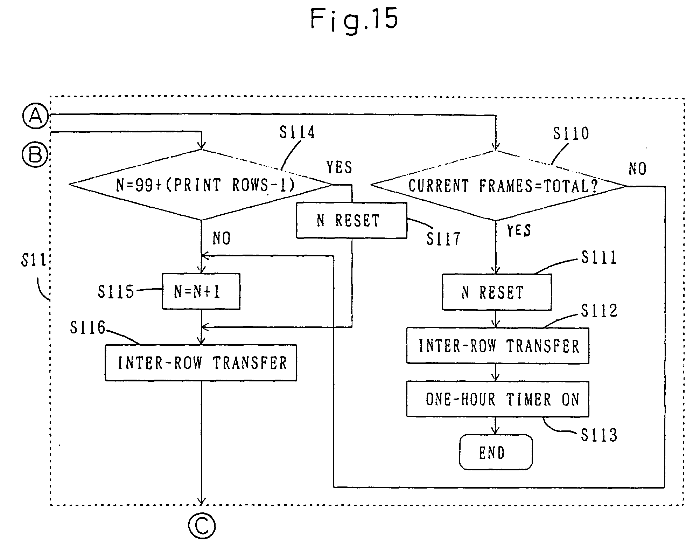

Fig. 15 is a flow chart of performing the inter-row transfer action of Step S11. The procedure of the action includes two flows A and B of steps depending on the requirements at Steps S9 and S10. The routine A will first be explained in relation to the action of Step S9.

The routine A starts with examining of the number of current frames at Step S110. It is judged whether or not the number is equal to the total number of frames. For example, this routine is carried out when the 23rd and 24th frame of a 24-frame film are detected. If the number is 23, no is given at Step S110. If 24, yes is submitted.

When the number is 23, the procedure goes to Steps S115 and S116 for the inter-row transfer action, which will be described later, where the number of prints is increased by one and the inter-row transfer action is carried out. After the action, the procedure goes back via the exit C to between Step S6 and Step S7 of Fig. 13 for releasing the photosensitive material for another 24-frame negative film.

When the 24th print is loaded to the transfer switch station 10, the number of frames comes equal to the total number and the procedure moves to Step S110. After the number of prints is reset, the inter-row transfer action is executed at Step S112. At Step S113, the one-hour timer is turned on before the procedure of developing the prints of an order film is terminated as well as the first embodiment.

As described, when the last frame of the prints of a film is used for the inter-row transfer action, the transfer of all the frames to the development station C is completed. While the previous prints are transferred in three or more rows for development, extra pieces of the photosensitive material are given in plural rows smaller by one than the number of the print rows for cleaning. It is thus understood that the more the number of rows for performing the inter-row transfer action, the more the number of pieces of the photosensitive material is needed.

The inter-row transfer action may be repeated as well as the first or second embodiment if the rollers in the development station C are heavily fouled with dirt. It may also be executed anytime during the transfer of an order film if desired.

Returning to Fig. 13, when no is given at Step S9', it is examined again at Step S10. This step is adapted in addition to the first embodiment to examine whether or not the length of a negative film segment is greater than a given length L (film length(=number of frames) >L). If yes, the inter-row transfer action is introduced. Otherwise, no is given at Step S9' and the inter-row action is not conducted. The action at Step S10 is similar to that of the first embodiment. In this embodiment, the inter-row transfer action is however executed with plural rows. Hence, the requirement is expressed by:

$$100 \leq \text{number of prints (N)}$$

$$< 100 + (\text{number of print rows -1}).$$

As the number of print rows is 3 in the third embodiment, the above is simplified to 100≤number of prints<102. Accordingly, when the number of prints is 100 or 101, the procedure goes to Step S11 for performing the inter-row transfer action.

As shown in Fig. 15, the procedure then moves further to Step S114 of the routine of Step S11. The number of prints is again examined whether or not it is equal to 99+(number of print rows -1). This means to examine whether N=101 is established or not. If N is not 101 or N=100, the inter-row transfer action is conducted at Step S116 and then, the procedure goes from the exit C to between Step S6 and Step S7 for starting transfer of the 101st frame.

When N=101, it is identified at Step S114. After the number of prints N is reset at Step S117, the inter-row transfer action is executed at Step S116 before the procedure goes back from the exit C to between Step S6 and Step S7 for continuing the multiple-row transfer action.

As understood, the procedure is not terminated according to the third embodiment.

As the number of rows of prints of the photosensitive material increases from three to more, the rows for the inter-row transfer action are increased to 2, 3, 4,... When the number of print rows is 4, the inter-row transfer action is conducted at the 100th and 101st frames and after the number of prints N is reset, the cleaning procedure is terminated with the 102nd frame. When the number of print rows is 5, the inter-row transfer action is conducted at the 100th, 101st, and 102nd frames and after the number of prints N is reset, the cleaning procedure is ended with the 103rd frame. Accordingly, pieces of the photosensitive material are fed corresponding to the number of cleaning rows.

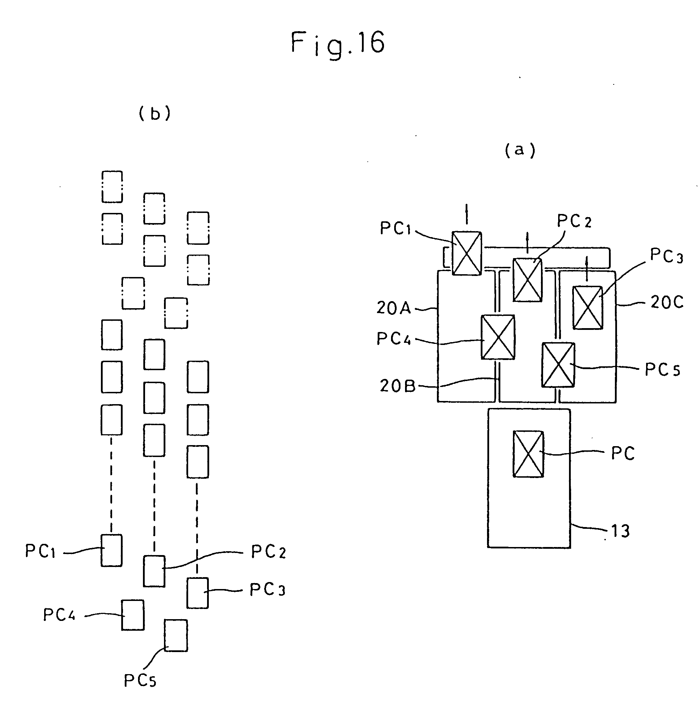

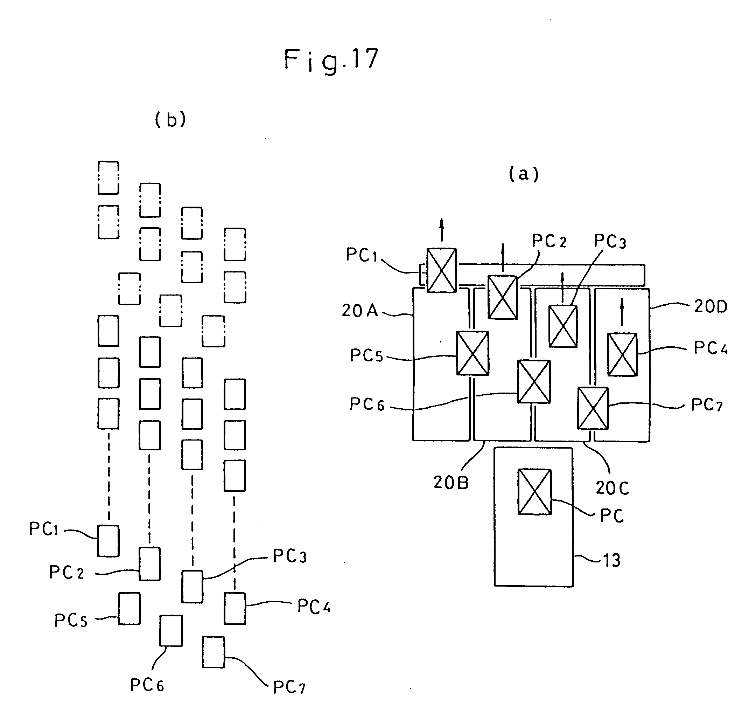

Figs. 16 and 17 show the transfer actions of the third embodiment. As shown in Fig. 16, while the prints are transferred in three rows, they are designated by the transfer switch station 10 to run along the parallel transfer unit 20 at the step (a) and they run with the multiple-row transfer mode through the development station C with two rows of cleaning pieces introduced in the inter-row transfer action. In Fig. 17 similar to Fig. 16, the prints are transferred in four rows while cleaning pieces are carried in three rows.

The generation of a time loss during the judgment whether or not the negative film length having 6 or less frames is longer than L at Step S9' will be apparent from Figs. 16 and 17. It is now assumed that three prints $PC_1$, $PC_2$, and $PC_3$ are fed in a zigzag form and followed by two cleaning pieces $PC_4$ and $PC_5$, as shown in the steps (a) and (b) of Fig. 16.

As apparent from the step (a), $PC_1$, $PC_2$, and $PC_3$ are overlapped each other along the transfer direction. If the switch to the inter-row transfer action is not executed, $PC_4$ may trace the path of $PC_1$. Because of the switching action, the transfer is made in a zigzag form which thus results in the time loss during the action.

## Claims

1. A method of transferring photosensitive material pieces from an exposure station (A) to a developing station (C) including,

    a multiple-row transfer mode in which the photosensitive material pieces (PC) are separated into multiple rows of pieces (PC) transferred at a controlled speed along a plurality of first transfer paths (20A, 20B); the pieces being conveyed along corresponding parallel paths in the developing station, **characterised by**
    a cleaning inter-row transfer mode in which other photosensitive material pieces (PC) which have not been exposed are transferred along one or more second paths extending along regions between the first transfer paths, whereby the regions between the conveying paths in the developing station (C) are cleaned by said other photosensitive pieces, and wherein
    the transfer action is selected between said multiple-row transfer mode and said cleaning inter-row transfer mode.

2. A photosensitive material transfer method as claimed in claim 1, wherein the selection is conducted by when the transfer action is continued after a given interval of stop action, carrying out the inter-row transfer mode action and then, shifting to the multiple-row transfer mode.

3. A photosensitive material transfer method as claimed in claim 2, wherein the transfer action is shifted from the multiple-row transfer mode to the inter-row transfer mode when the photosensitive material pieces (PC) carried in multiple rows are counted to a given number.

4. A photosensitive material transfer method as claimed in claim 3, wherein the shift of the transfer of the photosensitive material pieces (PC) from the multiple-row transfer mode to the inter-row transfer mode is executed at every order of a film or in any intermediate length point of the order.

5. A photosensitive material transfer method as claimed in claim 4, wherein the shift of the transfer to the inter-row transfer mode is executed when the condition: total number of frames minus (number of rows of photosensitive material pieces-1) < number of current frames <= total number of frames is satisfied.

6. A photosensitive material transfer method as claimed in claim 5, wherein the shift of the transfer from the multiple-row transfer mode to the inter-row transfer mode is executed with efficiency when a negative film length contains more than a predetermined number of frames.

## Patentansprüche

1. Methode zum Transportieren von lichtempfindlichen Materialstücken von einer Belichtungsstation (A) nach einer Entwicklungsstation (C), umfassend

    einen Mehrreihen-Transportmodus, bei dem die lichtempfindlichen Materialstücke (PC) in mehrere Reihen von Stücken (PC) getrennt werden, die mit einer gesteuerten Geschwindigkeit längs einer Vielzahl von ersten Transportpfaden (20A, 20B) transportiert werden; wobei die Stücke längs einander entsprechenden, parallelen Pfaden in der Entwicklungsstation befördert werden, **gekennzeichnet durch**

    einen reinigenden Zwischenreihen-Transportmodus, bei dem weitere lichtempfindliche Materialstücke (PC), die nicht belichtet wurden, längs eines oder mehr zweiter Pfade, die sich längs Gebieten zwischen den ersten Transportpfaden erstrecken, transportiert werden, wodurch die Gebiete zwischen den Beförderungspfaden in der Entwicklungsstation (C) **durch** die weiteren lichtempfindlichen Stücke gereinigt werden, und wobei

    der Transportvorgang zwischen dem Mehrreihen-Transportmodus und dem reinigenden Zwischenreihen-Transportmodus ausgewählt wird.

2. Transportmethode für lichtempfindliches Material, wie in Anspruch 1 beansprucht, wobei dann, wenn der Transportvorgang nach einem vorgegebenen Intervall des Haltevorgangs fortgesetzt wird, die Auswahl durch Ausführen des Zwischenreihen-Transportmodus-Vorgangs vorgenommen wird, und dann auf den Mehrreihen-Transportmodus übergegangen wird.

**3.** Transportmethode für lichtempfindliches Material, wie in Anspruch 2 beansprucht, wobei bei dem Transportvorgang von dem Mehrreihen-Transportmodus auf den Zwischenreihen-Transportmodus übergegangen wird, wenn bei den in mehreren Reihen beförderten, lichtempfindlichen Materialstücke (PC) eine vorgegebene Anzahl gezählt wurde.

**4.** Transportmethode für lichtempfindliches Material, wie in Anspruch 3 beansprucht, wobei der Übergang bei dem Transport der lichtempfindlichen Materialstücke (PC) von dem Mehrreihen-Transportmodus auf den Zwischenreihen-Transportmodus bei jedem Filmauftrag oder bei einem Zwischenlängenpunkt des Auftrags ausgeführt wird.

**5.** Transportmethode für lichtempfindliches Material, wie in Anspruch 4 beansprucht, wobei der Übergang des Transports auf den Zwischenreihen-Transportmodus ausgeführt wird, wenn die Bedingung: Gesamte Anzahl der Einzelbilder minus (Anzahl der Reihen von lichtempfindlichen Materialstücken - 1) < Anzahl der laufenden Einzelbilder < = Gesamte Anzahl der Einzelbilder erfüllt ist.

**6.** Transportmethode für lichtempfindliches Material, wie in Anspruch 5 beansprucht, wobei der Übergang des Transports von dem Mehrreihen-Transportmodus auf den Zwischenreihen-Transportmodus auf effiziente Weise ausgeführt wird, wenn eine Negativfilm-Länge mehr als eine vorgegebene Anzahl von Einzelbildern enthält.

**Revendications**

**1.** Procédé de transfert de pièces de matériau photosensible d'une station d'exposition (A) vers une station de développement (C), englobant:

un mode de transfert à rangées multiples dans lequel les pièces de matériau photosensible (PC) sont séparées en des rangées multiples de pièces (PC) transférées à une vitesse contrôlée le long de plusieurs premières trajectoires de transfert (20A, 20B); les pièces étant transférées le long de trajectoires parallèles correspondantes dans la station de développement, **caractérisé par**

un mode de transfert à nettoyage inter-rangées dans lequel d'autres pièces de matériau photosensible (PC) n'ayant pas été exposées sont transférées le long d'une ou de plusieurs deuxièmes trajectoires s'étendant le long de régions situées entre les premières trajectoires de transfert, les régions situées entre les trajectoires de transfert dans la station de développement (C) étant ainsi nettoyées par lesdites autres pièces de matériau photosensible, et dans lequel

l'action de transfert est sélectionnée entre ledit mode de transfert à rangées multiples et ledit mode de transfert à nettoyage inter-rangées.

**2.** Procédé de transfert de matériau photosensible selon la revendication 1, dans lequel la sélection est effectuée lors de la poursuite de l'action de transfert après un intervalle défini d'une action d'arrêt, avec exécution de l'action du mode de transfert inter-rangées avant de passer au mode de transfert à rangées multiples.

**3.** Procédé de transfert de matériau photosensible selon la revendication 2, dans lequel l'action de transfert passe du mode de transfert à rangées multiples au mode de transfert inter-rangées lorsque le nombre des pièces de matériau photosensible (PC) transférées en de multiples rangées correspond à une valeur définie.

**4.** Procédé de transfert de matériau photosensible selon la revendication 3, dans lequel le passage du transfert des pièces de matériau photosensible (PC) du mode de transfert à rangées multiples au mode de transfert inter-rangées est exécuté pour chaque film traité ou dans un quelconque point de la longueur intermédiaire du film traité.

**5.** Procédé de transfert de matériau photosensible selon la revendication 4, dans lequel le passage du transfert du mode de transfert inter-rangées est exécuté lorsque la condition: nombre total de clichés moins (nombre de rangées de pièces de matériau photosensible -1) < nombre des clichés en cours de traitement < = nombre total des clichés est satisfaite.

**6.** Procédé de transfert de matériau photosensible selon la revendication 5, dans lequel le passage du transfert du mode de transfert à rangées multiples au mode de transfert inter-rangées est exécuté de manière efficace lorsqu'une longueur de film négatif contient un nombre de clichés supérieur à un nombre prédéterminé.

# Fig.1

EP 0 670 519 B1

# Fig.2

PH3

PC

21

20

22

20A

21

22

20B

PC

PH2

12

14

10

13

15

11

12

# Fig.3

18

12a  17  16  16a  12a

11

12

13  15  14

# Fig.4

# Fig.5

| | | |
|---|---|---|
| 41 — DISPLAY | 43 — I/O PORTS | 48 — TIMER   CPU — 45 |
| 42 — KEYBOARD | | 44 |
| | | 46 — ROM   47 — RAM |
| 40 | | |

49       50

| | |
|---|---|
| transfer driver   a | roller (1)   a |
| cutter driver   b | cutter   b |
| transfer driver   c | roller (2)   c |
| exposure driver   d | exposure station   d |
| transfer driver   e | roller (3)   e |
| switch driver   f | switch station   f |
| transfer driver   g | roller (4)   g |
| transfer driver   h | roller (5)   h |

# Fig.6

START

S1 — ONE-HOUR TIMER ON

S2 — TRANSFER KEY ON ? — NO

YES

S3 — ONE HOUR ELAPSED AFTER PRINTING? — YES

NO ← (I)

S4 — CLEANING PROCESS

S5 — ONE-HOUR TIMER OFF

S6 — NUMBER OF PRINTS N=1

S7 — CUTTING PHOTOSENSITIVE MATERIAL

S8 — EXPOSURE

S9 — LAST FRAME AND FINAL FRAME? — YES

S11 — ONE-ROW TRANSFER

NO

S10 — N=100 — YES

NO

S12 — N=N+1

S13 — TWO-ROW TRANSFER

# Fig.7

S41 — MASSAGE INDICATION "CLEANING PROCESS STARTED?" [YES/NO]  — S4

S42 NO — CLEANING INTRODUCED?

① ←

YES

S43 — CUTTING PHOTOSENSITIVE MATERIAL

S44 — ONE-ROW TRANSFER

S45 — N RESET

# Fig.8

— S11

S111 — N RESET

S112 — ONE-ROW TRANSFER

S113 — ONE-HOUR TIMER ON

END

16

Fig.9

# Fig.10

START

S1 — ONE-HOUR TIMER ON

S2 — TRANSFER KEY ON ? — NO

YES

S3 — ONE HOUR ELAPSED AFTER PRINTING? — YES

NO — (I)

S5 — ONE-HOUR TIMER OFF

S4 — CLEANING PROCESS

S6 — NUMBER OF PRINTS N=1

S7 — CUTTING PHOTOSENSITIVE MATERIAL

S8 — EXPOSURE

S9 — LAST FRAME AND FINAL FRAME? — YES

S11 — ONE-ROW TRANSFER

NO

S10 — N=100 — YES

NO

S12 — N=N+1

S14 — N RESET

S13 — TWO-ROW TRANSFER

S15 — ONE-ROW TRANSFER

# Fig.11

Fig.12

# Fig.13

```
                    ┌─────────────┐
                    │   START     │
                    └─────────────┘
                           │
        S1 ──── ┌─────────────────────────┐
                │   ONE-HOUR TIMER ON     │
                └─────────────────────────┘
                           │
        S2 ──── ◇ TRANSFER KEY ON ? ◇ ──── NO
                           │ YES
        S3 ──── ◇ ONE HOUR ELAPSED AFTER PRINTING? ◇ ──── YES ──── S4 ┌──────────────────┐
                           │ NO          (I)                          │ CLEANING PROCESS │
        S5 ──── ┌─────────────────────────┐                          └──────────────────┘
                │   ONE-HOUR TIMER OFF    │
                └─────────────────────────┘
                           │
        S6 ──── ┌─────────────────────────┐
                │   NUMBER OF PRINTS N=1  │
                └─────────────────────────┘
        S7 ──── ┌──────────────────────────────────┐
                │ CUTTING PHOTOSENSITIVE MATERIAL  │
                └──────────────────────────────────┘
        S8 ──── ┌─────────────────────────┐
                │       EXPOSURE          │
                └─────────────────────────┘
        S9 ──── ◇ TOTAL-(PRINT ROWS-1)<CURRENT ≦ TOTAL ◇ ──── YES
                           │ NO                      S9' ◇ TOTAL>L ◇ ──── YES
        S10 ─── ◇ 100 ≦ N<100+(PRINT ROWS-1) ◇ ── YES              │ NO
                           │ NO                            ┌──────────────────┐
        S12 ─── ┌─────────────┐                      A ──│  INTER-ROW       │
                │   N=N+1     │                           │  TRANSFER        │
                └─────────────┘                      B ──│                C │
        S13 ─── ┌──────────────────────────┐              └──────────────────┘
                │ MULTIPLE-ROW TRANSFER    │                      S11
                └──────────────────────────┘
```

# Fig.14

```
S40 ──┐      ┌─────────────────────────┐
             │   COUNTER  M  RESET      │
             └─────────────────────────┘                    ──── S4
                          │
S41 ──┐      ┌─────────────────────────────────────┐
             │       MASSAGE  INDICATION            │
             │  "CLEANING  PROCESS  STARTED?"       │
             │              [YES/NO]                │
             └─────────────────────────────────────┘
                          │
        NO    S42 ──◇─────────────────────────────◇
 ①  ◄─────────  ⟨   CLEANING  INTRODUCED?          ⟩
                    ◇─────────────────────────────◇
                          │ YES
S40' ──┐     ┌─────────────────────────┐
             │    COUNTER  SET  M=1     │
             └─────────────────────────┘
                          │
S43 ──┐      ┌─────────────────────────────────────┐
             │  CUTTING  PHOTOSENSITIVE  MATERIAL   │
             └─────────────────────────────────────┘
S44 ──┐      ┌─────────────────────────────────────┐
             │        INTER-ROW  TRANSFER           │
             └─────────────────────────────────────┘
                          │
S40" ──◇──────────────────────────◇     NO
       ⟨   M=PRINT  ROWS  -  1      ⟩ ─────────┐
       ◇──────────────────────────◇            │
                   │ YES                    S46 ┐
S45 ──┐      ┌───────────────┐          ┌──────────┐
             │   N  RESET     │          │  M=M+1   │
             └───────────────┘          └──────────┘
```

# Fig.15

Flowchart:

- (A)
- (B)

S114: N=99÷(PRINT ROWS-1)
- YES → N RESET (S117)
- NO

S110: CURRENT FRAMES=TOTAL?
- YES
- NO

S11

S115 → N=N+1

S116 → INTER-ROW TRANSFER

S111: N RESET
S112: INTER-ROW TRANSFER
ONE-HOUR TIMER ON
S113: END

(C)

# Fig.16

(b)

(a)

PC1
PC2
PC3
20A
20C
PC4
PC5
20B
PC
13

PC1
PC2
PC4
PC3
PC5

EP 0 670 519 B1

# Fig.17

(b)

(a)

PC1
PC2
PC3
PC4
PC5
PC6
PC7

PC1
PC2
PC3
20A
20D
PC4
PC5
PC6
PC7
20B
20C
PC
13

EP 0 670 519 B1